(19) Europäisches Patentamt
European Patent Office
Office européen des brevets

(11) EP 2 273 334 A1

(12) **EUROPEAN PATENT APPLICATION**

(43) Date of publication:
**12.01.2011 Bulletin 2011/02**

(51) Int Cl.:
***G05D 1/02*** (2006.01)

(21) Application number: **09275047.0**

(22) Date of filing: **22.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BAE Systems PLC**
**6 Carlton Gardens**
**London SW1Y 5AD (GB)**

(72) Inventors:
• **Stewart, Alexander, Douglas**
**South Gloucestershire BS99 7AR (GB)**

• **Brimble, Richard, Arthur**
**South Gloucestershire BS99 7AR (GB)**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Terrain sensing**

(57) A method and apparatus for terrain sensing that obtains data (104) from at least one sensor onboard a vehicle. The sensor data is used to generate data representing a surface defined by a set of control points. Gradient information is then generated by computing a gradient of the surface for at least one query point, and the gradient information is converted into a local frame coordinate system for the vehicle.

Fig.1.

EP 2 273 334 A1

**Description**

The present invention relates to terrain sensing. Autonomous vehicles are intended to be able to navigate without constant human interaction. Certain types of terrain in particular are challenging for such vehicles. For example, if a vehicle is navigated into an area having an excessively steep gradient then there is a danger of it rolling over.

Embodiments of the present invention are intended to assist with guiding an autonomous vehicle, for example to help avoid areas of terrain that have a gradient where there is a rollover risk.

According to a first aspect of the present invention there is provided a method of terrain sensing for use onboard a vehicle, the method including:

obtaining data from at least one sensor onboard a vehicle;
using the sensor data to generate data representing a surface defined by a set of control points;
generating gradient information by computing a gradient of the surface for at least one query point, and
converting the gradient information into a local frame coordinate system for the vehicle.

The method may include using a Kalman filter process to generate a B-spline representation of the surface. The B-spline may be a NURBS (Non Uniform Rational Basis Spline).

The step of generating gradient information may include calculating a normal vector to the surface and deriving a transform relative to the z-axis of the vehicle frame. The method may include checking the gradient information against at least one threshold to assess vehicle rollover risk. The step of assessing the vehicle rollover risk may include:

obtaining data representing a yaw of the vehicle;
obtaining data representing a normal of a location on the surface where the vehicle is positioned, and
using the yaw and surface normal data to estimate roll and pitch of the vehicle at its location.

The method may further include comparing the roll and pitch with models to assess whether the vehicle is at a rollover risk.

The method may further include:

storing a first data set representing the surface at a first point in time;
storing a second data set representing the surface at a second point in time, and
comparing the first and the second data sets to detect changes relating to the surface.

The method may further include a step of using the converted gradient information to assist planning a route for the vehicle.

According to yet another aspect of the present invention there is provided a computer program product comprising a computer readable medium, having thereon computer program code means, when the program code is loaded, to make the computer execute a method of terrain sensing substantially as described herein.

According to another aspect of the present invention there is provided apparatus configured to assist with failure mode and effects analysis of a system, the apparatus including:

a processor configured to:
obtain data from at least one sensor onboard a vehicle;
use the sensor data to generate data representing a surface defined by a set of control points;
generate gradient information by computing a gradient of the surface for at least one query point, and
convert the gradient information into a local frame coordinate system for the vehicle.

The at least one sensor may include LIDAR, RADAR or image-based sensors. The vehicle may be an at least partially autonomous vehicle.

According to yet another aspect of the present invention there is provided a method assess risk of rollover of a vehicle, the method including:

obtaining data representing a yaw of the vehicle;
obtaining data representing a normal of a location on the surface where the vehicle is positioned;
using the yaw and surface normal data to estimate roll and pitch of the vehicle at its location.

The method may further include comparing the roll and pitch with thresholds to assess whether the vehicle is at a rollover risk.

According to a further aspect of the present invention there is provided a a method of detecting change in a surface, the method including:

>   storing a first data set representing the surface at a first point in time;
>   storing a second data set representing the surface at a second point in time, and
>   comparing the first and the second data sets to detect changes relating to the surface.

The data sets may be generated by using a Kalman filter process to generate a B-spline representation of the surfaces.

Computer program products and apparatus configured to execute the methods described herein are also provided.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:

>   Figure 1 is a schematic illustration of an example architecture for an autonomous vehicle controller;
>   Figure 2 is a flowchart outlining steps performed by a process executed by the controller;
>   Figure 3 is a diagram illustrating an autonomous vehicle on a gradient;
>   Figure 4 is a flowchart detailing a filter update stage of the process;
>   Figure 5 is a flowchart detailing a filter prediction stage of the process;
>   Figure 6 illustrates graphically data produced by the process;
>   Figure 7 shows a vehicle on an arbitrary 2.5D surface;
>   Figure 8 illustrates graphically rigid motion;
>   Figure 9 is a kimematic model of a simple car;
>   Figure 10 illustrates schematically separation of B-spline estimation and evaluation;
>   Figure 11 illustrates schematically origins of information matrix sparsity;
>   Figure 12 illustrates schematically information matrix diagonals, and
>   Figure 13 is graph showing the benefits of exploiting the sparsity of information matrix.

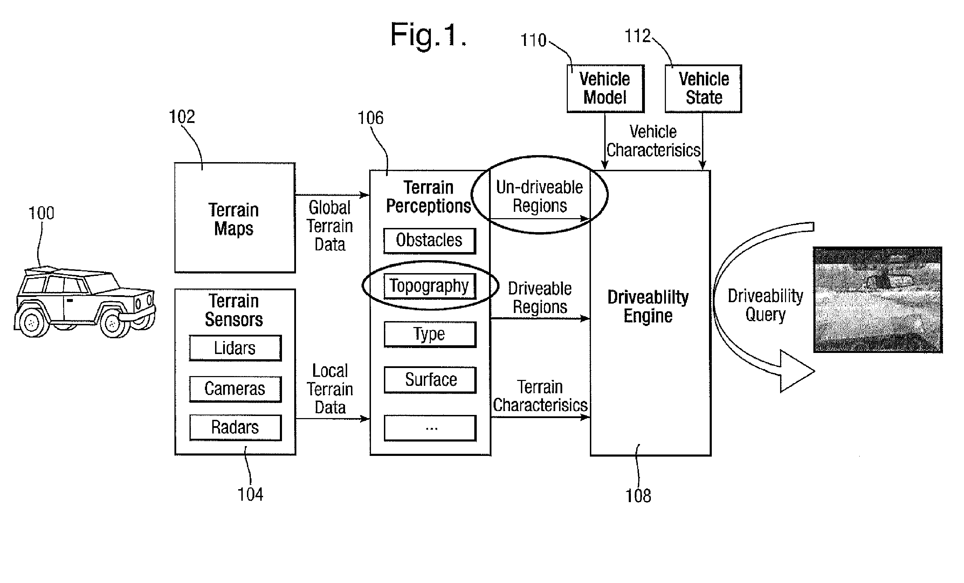

Figure 1 shows a vehicle 100 along with a diagram schematically illustrating components of a controller that assists with autonomous driving of the vehicle. Although a full size land vehicle is shown in the example, it will be appreciated that the system and processes described herein can be implemented on other types of vehicles.

The controller receives inputs including terrain maps 102, which provide global terrain data, and signals from at least one terrain sensor 104 that provide local terrain data (i.e. data derived from sensors onboard the vehicle). A non-exhaustive list of such sensors includes LIDAR, stereovision cameras and/or RADAR based sensors. The inputs 102, 104 are received by a terrain perceptions component 106 that processes them to determine characteristics of the present terrain, e.g. whether there are any obstacles in the vicinity; the topography; and the type of terrain (e.g. mud, sand, etc).

The terrain perceptions component can produce one or more output, e.g. data describing un-driveable regions, data describing driveable regions and/or data describing terrain characteristics. These outputs are passed to a driveability engine 108, responsible for predicting vehicle response on uneven terrain. The 108 engine also receives input in the form of vehicle model data 110 (which models characteristics of the vehicle, such as tyre models, tip-over limits and kinematic/dynamic constraints) and vehicle state data 112 (which can include, for example, the planned velocity of the vehicle, the state of its steering mechanism, and pose including position, orientation and associated velocities and accelerations, etc). The engine 108 is configured to receive a driveability query, e.g. generated by a route planning component (not shown) for the vehicle 100, and return an answer to that, e.g. an indication whether or not a proposed route is driveable.

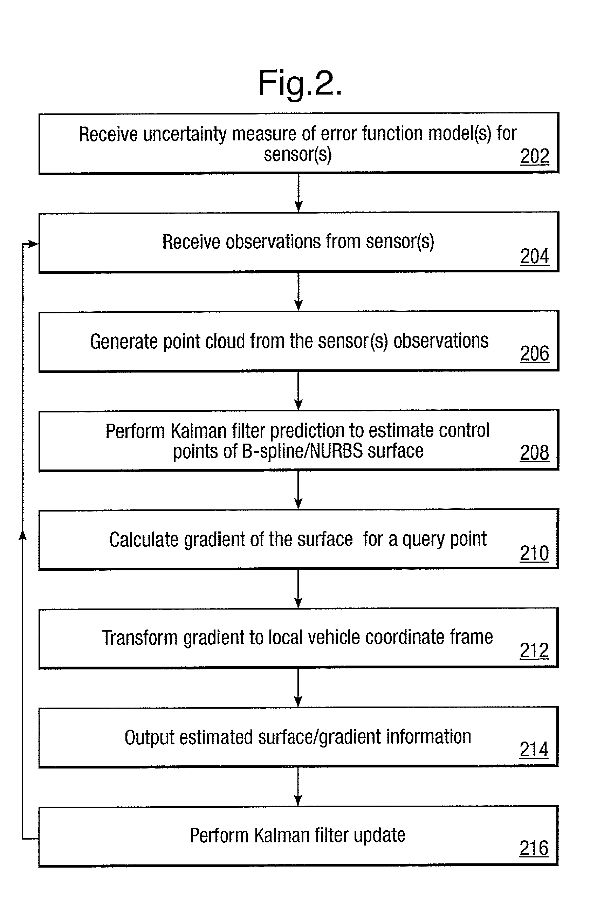

Figure 2 shows steps performed by a processor configured to perform part of the terrain perceptions functionality relating to topography. At step 202 a measure of uncertainty derived from an error function model for the sensor(s) that provide data into the process is obtained. The position of the vehicle may also be taken into account. This information will be used in calculating a 2.5 dimensional representation of the terrain.

At step 204 observations (e.g. data 104 from the sensor(s)) are received and at step 206 a point cloud describing the terrain based on the sensor data is produced using processes known to the skilled person.

At step 208 a Kalman filter prediction stage is used to generate an estimate of control points of a B-spline surface based on the sensor measurements. The skilled person will appreciate that alternative filtering techniques could be used to represent multi-level surfaces by means of multi-model distributions, such as Mixture of Gaussian and Particle filters. The B-spline surface may be a NURBS (Non Uniform Rational Basis Spline) defined by a set of control points:

$$S(u,v) = \sum_{i=0}^{n} \sum_{j=0}^{m} N_{i,p}(u) N_{j,q}(v) P_{i,j}$$

The control points of the derivative surface with respect to both u and v can be calculated as follows, although the skilled person will appreciate that other known equations can be used:

$$P^{(1,0)}_{i,j} = p(P_{i+1,j} - P_{i,j})/(u_{i+p+1} - u_{i+1})$$

At step 210 the value of the gradient in terms of *u, v* with associated uncertainty is computed. This is the gradient at a query point, which will typically be a point state in a proposed route for vehicle. At step 212 these gradients are transformed into a coordinate frame that is local to the vehicle so that the vehicle controller can use them directly.

At step 214 the data representing the estimated surface and/or the gradient information is output, e.g. to a process onboard the vehicle controller that checks the gradient against at least one threshold in order to confirm whether the vehicle is at risk of rolling over if it were to traverse the gradient. At step 216 a Kalman filter update is performed and control then passes back to step 204.

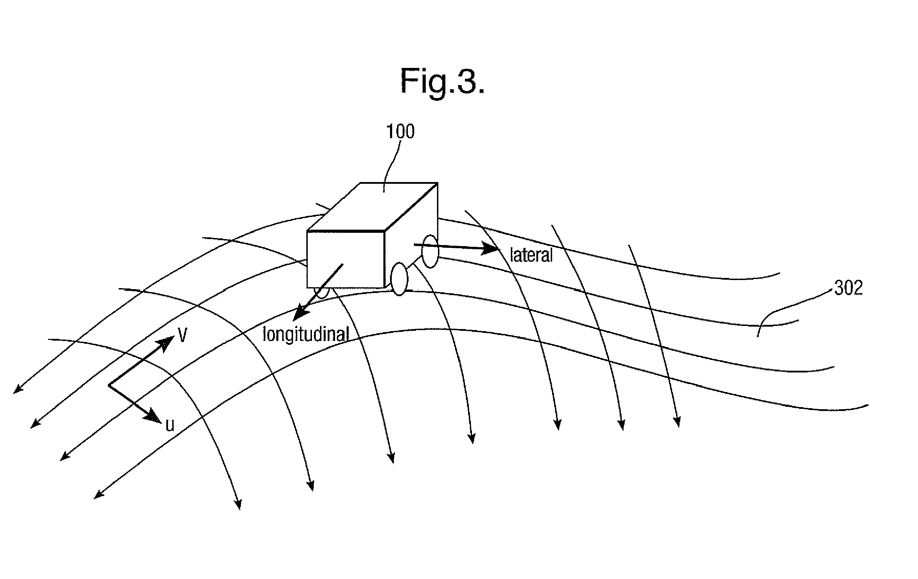

Figure 3 is a diagram showing vehicle 100 on a surface 302 represented by B-splines and also illustrates the u, v axes and the vehicle's local lateral (y) and longitudinal (x) as axes for its local coordinate frame. Step 212 above transforms the gradient from the u, v axes on the surface to the vehicle's local frame coordinate system to assist with autonomous control. This is performed by calculating the normal vector to the gradient surface and deriving the transform relative to the z-axis of the vehicle frame.

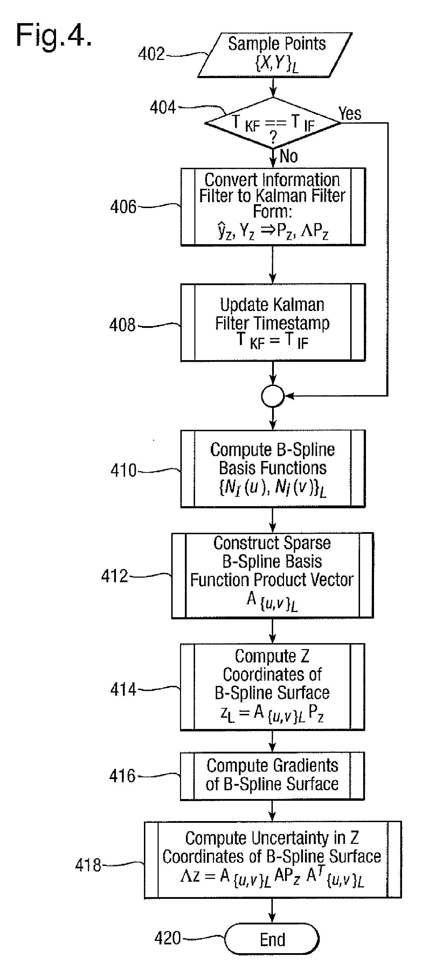

Figure 4 shows the Kalman filter prediction stage and associated steps outlined in Figure 2 in more detail. At step 402 the sample points are received. At step 404 a question is asked as to whether the timestamp for the Kalman filter ($T_{KF}$) is equal to the timestamp for the information filter ($T_{IF}$). The information filter is an exact equivalent form of the Kalman Filter, which operates in information-space and in general reduces the computational complexity of the update stage of the filter at the expense the prediction stage and is thus more suited to high-frequency update filters. If this is not the case then control passes to step 406, where the information filter is converted to Kalman filter form. After this, at step 408, the Kalman filter timestamp is updated so that it is equal to the information filter timestamp value.

At step 410 the B-spline basis function is calculated and at step 412 a sparse B-spline basis function product vector is constructed. At step 414 the z coordinates of the B-spline surface are computed. At step 416 the gradients of the B-spline surface are computed. The gradients are calculated by constructing a gradient surface by differentiating the control points of the NURBS surface to obtain the control points of the derivative surface. At step 418 the uncertainty in z coordinates of the B-spline surface is computed and the process ends at step 420, which can result in an output representing a mean estimate of the sensed terrain surface with associated uncertainty.

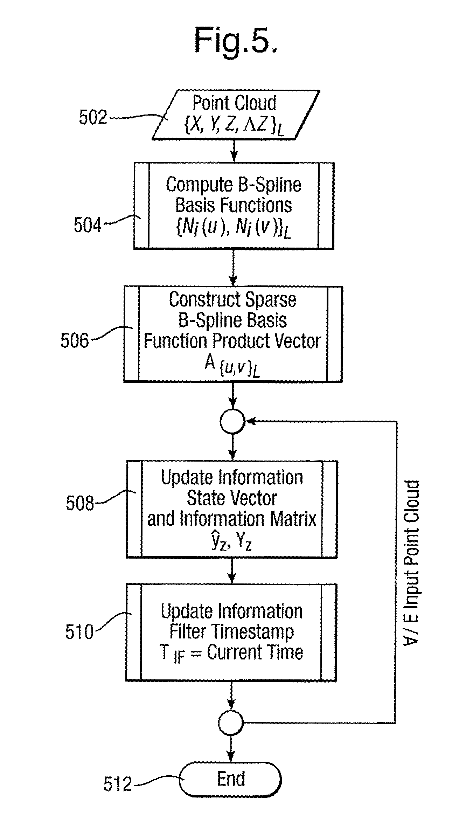

Figure 5 shows the Kalman filter update stage outlined in Figure 2 in more detail. At step 502 the point cloud data is received. At step 504 the B-spline basis function is computed. At step 506 a sparse B-spline basis function product vector is constructed. Next, at step 508, the information state vector and information matrix is updated. At step 510 the information filter timestamp is updated as the current time. Steps 508 and 510 can be repeated for all points in the point cloud and the process ends at step 512.

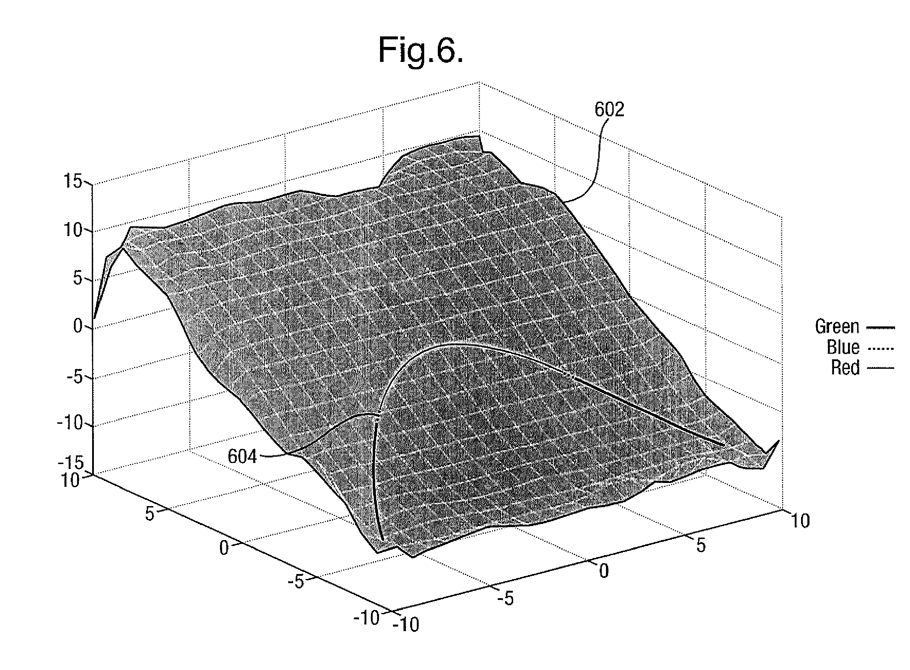

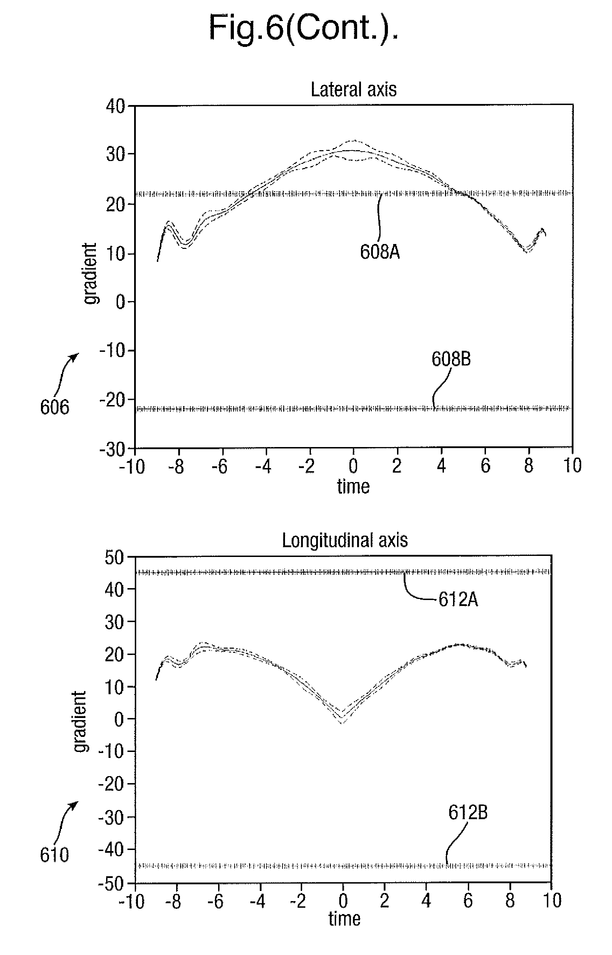

Figure 6 illustrates graphically a B-spline surface 602 generated by the processes described above. Highlighted on the surface is a proposed path 604 to be traversed by the autonomous vehicle. Graph 606 shows the magnitude of the gradient with respect to the lateral axis of the vehicle's local coordinate frame against time as the vehicle traverses the path. Upper 608A and lower 608B thresholds are also shown on the graph. As can be seen, part of the path crosses the upper threshold, indicating that there is a risk of rollover at this point. Graph 610 shows the magnitude of the gradient with respect to the longitudinal axis of the vehicle's local coordinate frame against time as the vehicle traverses the path. Upper 612A and lower 612B thresholds are also shown on the graph. It will be understood that the gradient information can be processed by the autonomous vehicle controller and if, for example, a proposed route includes an area having a dangerous gradient, then the controller can be configured to generated another proposed route that avoids that area.

The process for creating a B-spline surface using a Kalman filter described above can be modified to provide change detection functionality. This can involve analysing the generated surface for changes over a period of time in order to either detect changes in terrain geometry and/or detect changes due to objects appearing, moving or disappearing. It is also possible to set up a process to detect whenever surface measurements are inconsistent with the surface estimate. The skilled person will appreciate that the process can be adapted to operate with inputs from fixed sensors to perform such change detection. This can be useful for several tasks, including detecting if (part of a) terrain has been disturbed (intentionally or naturally).

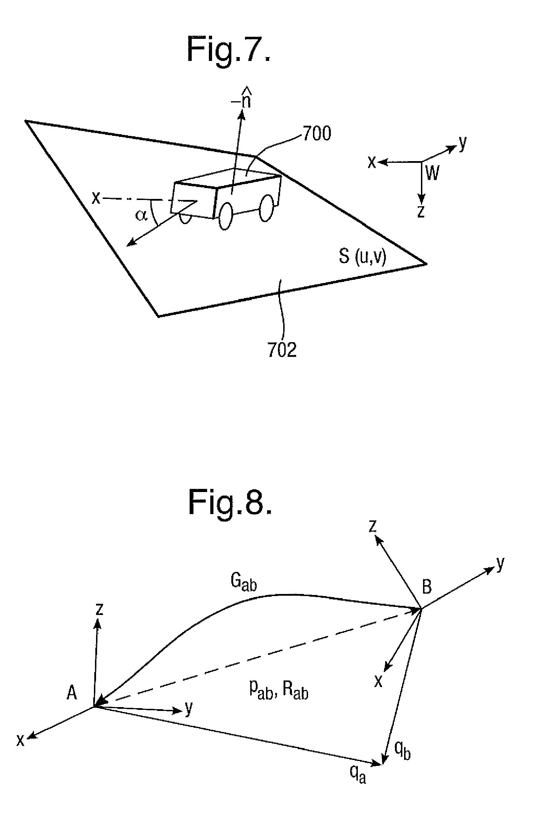

One use for the gradient information that has been calculated is to predict whether gravity is likely to cause a land vehicle to fall over onto its side when it is standing on the surface having that gradient. Figure 7 shows a vehicle 700 on an arbitrary 2.5D surface 702. W denotes an external reference frame; S(u, v) denotes a surface parameterised by {u, v}, n^ denotes the surface normal at the vehicle position and $\alpha$ denotes the vehicle yaw measured in W. For simplicity, n^ is defined as positive when directed into the surface interior.

Static rollover is assumed to occur when the magnitudes of the vehicle's pitch ($\beta$) and roll ($\varphi$) exceed defined thresholds, as set out compactly in equation (1') below. Thus, the objective problem is to estimate the roll and pitch of the vehicle if it were placed at an arbitrary position on the surface at an arbitrary yaw ($\alpha$).

$$|\beta| >= \beta_{lim} \cup |\varphi| >= \varphi_{lim} \tag{1'}$$

Considering the general case of rigid motion in $R^3$ shown in Figure 8, $\mathbf{p}_{ab} \in R^3$, $\mathbf{R}_{ab} \in SO(3)$ denote the position vector and rotation matrix that define the orientation of frame **B** measured from frame **A** (see RM Murray, Z Li, SS Sastry, *A Mathematical Introduction to Robotic Manipulation,* CRC Press 1994). The following conventions used in aerospace for rigid motion in $R^3$ using right-handed orthogonal coordinate systems are adopted:

C1 Construct the homogenous transformation $\mathbf{G}_{ab} \in SE(3) : \mathbf{q}_a \overset{\Delta}{=} \mathbf{G}_{ab}\mathbf{q}_b$ by measuring position $\mathbf{p}_{ab}$ and orientation $\mathbf{R}_{ab}$ of the origin frame **B**, in the destination frame **A.**

C2 Define the orientation of the origin frame **B** in the destination frame **A** through three consecutive rotations starting from frame **A** in the following order: first yaw ($\alpha$) then pitch ($\beta$) then roll ($\varphi$).

C3 Construct $\mathbf{R}_{ab}$, the rotation component of $\mathbf{G}_{ab} : p_b \rightarrow p_a$ by applying the same rotation angles measured in C2 in the opposite order, i.e. first roll, then pitch then yaw.

C4 The valid ranges for roll, pitch and yaw are: $\varphi \in [-\pi, \pi]$, $\beta \in [-\pi/2, \pi/2]$, $\alpha \in [-\pi, \pi]$

Element rotations about the x-, y and z-axes can be represented as rotation matrices $\in SO(3)$:

$$R_x(\phi) = \begin{bmatrix} 1 & 0 & 0 \\ 0 & \cos(\phi) & -\sin(\phi) \\ 0 & \sin(\phi) & \cos(\phi) \end{bmatrix} \tag{2}$$

$$R_y(\beta) = \begin{bmatrix} \cos(\beta) & 0 & \sin(\beta) \\ 0 & 1 & 0 \\ -\sin(\beta) & 0 & \cos(\beta) \end{bmatrix} \tag{3}$$

$$R_z(\alpha) = \begin{bmatrix} \cos(\alpha) & -\sin(\alpha) & 0 \\ \sin(\alpha) & \cos(\alpha) & 0 \\ 0 & 0 & 1 \end{bmatrix} \tag{4}$$

Hence it is possible to derive the matrix form of $\mathbf{R}_{ab}$ (5') using C3:

$$R_{ab} = R_z(\alpha) \cdot R_y(\beta) \cdot R_x(\phi) = \begin{bmatrix} c_\alpha c_\beta & (c_\alpha s_\beta s_\phi - s_\alpha c_\phi) & (c_\alpha s_\beta c_\phi + s_\alpha s_\phi) \\ s_\alpha c_\beta & (s_\alpha s_\beta s_\phi + c_\alpha c_\phi) & (s_\alpha s_\beta c_\phi - s_\phi c_\alpha) \\ -s_\beta & c_\beta s_\phi & c_\beta c_\phi \end{bmatrix} \quad (5')$$

For the stated problem, the estimation of roll an pitch angles for a vehicle with known yaw at a position on the surface with a known surface normal n^, frame **A** is defined to be the external frame (e.g. UTM) and frame **B** to be the vehicle frame. The origins of the frame can be assumed to be co-located: $\mathbf{p}_{ab} = \mathbf{0}$. As $\mathbf{q}_a = \mathbf{R}_{ab}\,\mathbf{q}_b$ the following relationships between frames **A** and **B** hold:

$$\hat{n} = R_{ab} \begin{bmatrix} 0 \\ 0 \\ 1 \end{bmatrix} \quad (6')$$

$$0 = \left( R_{ab} \begin{bmatrix} 1 \\ 0 \\ 0 \end{bmatrix} \right) \bullet \hat{n} \quad (7')$$

Considering (7') and (5') it is possible to derive (8') for $\beta$:

$$0 = \left( \mathbf{R}_{ab} \begin{bmatrix} 1 \\ 0 \\ 0 \end{bmatrix} \right) \bullet \hat{n}$$

$$= \begin{bmatrix} c_\alpha c_\beta \\ s_\alpha c_\beta \\ -s_\beta \end{bmatrix} \bullet \hat{n}$$

$$= (\hat{n}_1 c_\alpha) c_\beta + (\hat{n}_2 s_\alpha) c_\beta - (\hat{n}_3) s_\beta$$

$$(\hat{n}_3) s_\beta = (\hat{n}_1 c_\alpha + \hat{n}_2 s_\alpha) c_\beta$$

$$\tan(\beta) = \frac{s_\beta}{c_\beta} = \frac{\hat{n}_1 c_\alpha + \hat{n}_2 s_\alpha}{\hat{n}_3}$$

$$\beta = \operatorname{atan2}(\hat{n}_1 c_\alpha + \hat{n}_2 s_\alpha, \hat{n}_3) \quad (8')$$

Similarly, as $\beta$ is known from (8'), it is possible to derive (9') from (6') and (5'):

$$\hat{n} = \mathbf{R}_{ab} \begin{bmatrix} 0 \\ 0 \\ 1 \end{bmatrix}$$

$$= \begin{bmatrix} c_\alpha s_\beta c_\phi + s_\alpha s_\phi \\ s_\alpha s_\beta c_\phi - c_\alpha s_\phi \\ c_\beta c_\phi \end{bmatrix}$$

$$(c_\beta) c_\phi = \hat{n}_3$$

$$c_\phi = \frac{\hat{n}_3}{c_\beta}$$

$$s_\alpha \cdot \hat{n}_1 - c_\alpha \cdot \hat{n}_2 = (s_\alpha c_\alpha s_\beta) c_\phi + s_\alpha^2 s_\phi - (s_\alpha c_\alpha s_\beta) c_\phi + c_\alpha^2 s_\phi$$

$$s_\alpha \cdot \hat{n}_1 - c_\alpha \cdot \hat{n}_2 = (s_\alpha^2 + c_\alpha^2) s_\phi$$

$$s_\alpha \hat{n}_1 - c_\alpha \hat{n}_2 = s_\phi$$

$$\frac{s_\phi}{c_\phi} = \frac{s_\alpha \hat{n}_1 - c_\alpha \hat{n}_2}{\frac{\hat{n}_3}{c_\beta}}$$

$$\tan(\phi) = \frac{c_\beta(s_\alpha \hat{n}_1 - c_\alpha \hat{n}_2)}{\hat{n}_3}$$

$$\phi = \operatorname{atan2}([c_\beta(s_\alpha \hat{n}_1 - c_\alpha \hat{n}_2)], \hat{n}_3)$$

(9')

It is noted that although there are multiple alternative formulations for calculating β and φ, only those where the final angle is obtained using atan2 should be used in order to ensure that the result is correctly signed. In addition, (8') and (9') are numerically stable for all $\varphi \in [-\pi, \pi]$, $\beta \in [-\pi/2, \pi/2]$, $\alpha \in [-\pi, \pi]$, which is generally not true (any alternative formulations should thus be checked to ensure validity for all variables).

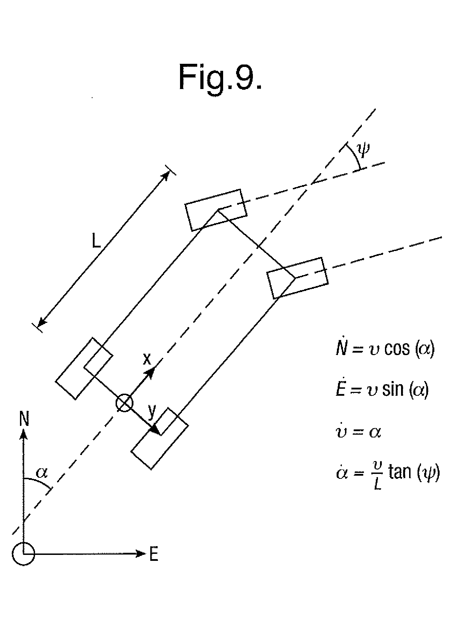

In order to utilise the algorithms described above as a driver aid for manned vehicles, the trajectory the driver is planning to follow should ideally be known. As this is not always possible with a human driver it may be preferable to evaluate φ, β for a set of kinematically-feasible candidate trajectories for the simple car shown in Figure 9 (see SM LaValle, "Planning Algorithms", Cambridge University Press, 2006), transformed to the human-driven vehicle's current position.

For completeness, a mathematical description of the terrain sensing process will now be given. B-spline surfaces are a standard representation in the computer-aided design community across a wide variety of fields due to their compact and intuitive representation of potentially complex surfaces. As such they have are well understood by the skilled person, (see, for example, Y Huang, X Qian, Dynamic B-spline Surface Reconstruction: Closing the sensing-and-modelling loop in 3D digitaliziation, Computer-Aided Design, Vol. 39, Issue 11, November 2007). A brief overview of the key principles of B-spline surfaces is given below.

A B-spline surface of degrees $p,q$ in the $u \in [0,1]$, $v \in [0,1]$ parametric directions along the surface respectively is defined by equation (1) below. The control points of the surface are denoted by $\mathbf{P}_{i,j} \in \mathrm{R}^3$, $N_{i,p}(u) \in \mathrm{R}^1$ and $N_{j,q}(v) \in \mathrm{R}^1$ are the B-spline basis functions in the $u,v$ parametric directions along the surface respectively and $S(u,v) \in \mathrm{R}^3$ is the position of the surface at the evaluation point $(u,v)$.

$$S(u, v) = \sum_{i=0}^{n} \sum_{j=0}^{m} N_{i,p}(u) N_{j,q}(v) P_{i,j}$$

(1)

For a *B*-spline surface of degrees *p,q* with n control points in *u* and *m* in *v*, there are *r* = *n* + *p* + 1 knots in *U* and *s* = *m* + *q* + 1 knots in *V*, the knot vectors in *u* and *v* respectively, given by equation (2) below:

$$U = \{0_0, \ldots, 0_p, u_{p+1}, \ldots u_{r-p-2}, 1_{r-p-1}, \ldots, 1_{r-1}\}$$

$$V = \{0_0, \ldots, 0_q, v_{q+1}, \ldots v_{s-q-2}, 1_{s-q-1}, \ldots, 1_{s-1}\}$$

(2)

The following properties of *B*-spline surfaces can be derived from the reference given above:

- In any given rectangle $[u_{i0}, u_{i0}+1] \times [v_{j0}+1]$ at most $(p+1)(q+1)$ basis functions are non-zero, in particular $N_{i,p}(u)$ $N_{j,q}(v)$ for $i_0 - p \le i \le i_0$ and $j_0 - q \le j \le j_0$.
- The surface interpolates the four corner control points: $S(0,0) = P_{0,0}$, $S(1,0) = P_{n,0}$, $S(0,1) = P_{0,m}$ and $S(1,1) = P_{n,m}$.
- Local modification scheme: if $P_{i,j}$ is moved it affects the surface only in the rectangle $[u_i, u_{i+p+1}] \times [v_j, v_{j+q+1}]$.
- $S(u,v)$ is $p - k$ times differentiable in the *u* direction at a *u* knot of multiplicity *k*, a similar relation holds for *v*, albeit with *p* interchanged for *q*.

In the general discrete linear system given by (3), at time-step *k*, $\mathbf{x}(k)$ is the state, $\mathbf{u}(k)$ is the input vector, $\mathbf{v}(k)$ is some additive motion noise, $\mathbf{B}(k)$ and $\mathbf{G}(k)$ are the input and noise transition matrices and $\mathbf{F}(k)$ is the state transition matrix. Correspondingly, $\mathbf{z}(k)$ is the observation at time-step *k*, $\mathbf{H}(k)$ is the observation matrix (model) and $\mathbf{w}(k)$ is some additive observation noise. It is additionally assumed that $\mathbf{v}(k)$ and $\mathbf{w}(k)$ (the noise terms) are zero-mean and have covariance matrices given by $\mathbf{Q}(k)$ and $\mathbf{R}(k)$, respectively.

$$\mathbf{x}(k) = \mathbf{F}(k)\mathbf{x}(k-1) + \mathbf{B}(k)\mathbf{u}(k) + \mathbf{G}(k)\mathbf{v}(k)$$

$$\mathbf{z}(k) = \mathbf{H}(k)\mathbf{x}(k) + \mathbf{w}(k)$$

(3)

The prediction and update stages for a Kalman Filter for this problem are given in equations (4) and (5), respectively:

$$\mathbf{x}^{\wedge}(k \mid k-1) = \mathbf{F}(k)\mathbf{x}^{\wedge}(k-1 \mid k-1) + \mathbf{B}(k)\mathbf{u}(k)$$

$$\mathbf{E}(k \mid k-1) = \mathbf{F}(k)\mathbf{E}(k-1 \mid k-1)\mathbf{F}^{T}(k) = \mathbf{G}(k)\mathbf{Q}(k)\mathbf{G}^{T}(k)$$

(4)

$$\mathbf{x}^{\wedge}(k \mid k) = \mathbf{x}^{\wedge}(k \mid k - 1) + \mathbf{W}(k)(z(k) - \mathbf{H}(k)\mathbf{x}^{\wedge}(k \mid k - 1))$$

$$\mathbf{W}(k) = \mathbf{E}(k \mid k - 1)\mathbf{H}^{T}(k)(\mathbf{H}(k)\mathbf{E}(k \mid k - 1)\mathbf{H}^{T}(k) + \mathbf{R}(k))^{-1} \qquad (5)$$

$$\mathbf{E}(k \mid k) = \mathbf{E}(k \mid k - 1) - \mathbf{W}(k)\mathbf{H}(k)\mathbf{E}(k \mid k - 1)$$

In order to represent the local environment from uncertain point cloud observations using a *B*-spline surface (1) the following simplifying assumptions are made:

A1 The operating environment can be accurately represented as a 2.5*D* surface, therefore $\forall \{x,y\} \exists! z$.
A2 The variance in the *x,y* components of each point observation denoted $\Lambda x$, $\Lambda y$ is negligible and can be assumed to be zero, hence the only source of uncertainty exists in z component, $\Lambda z \neq 0$.
A3 The {x,y} coordinates of $P_{i,j}$ are user-defined and known a priori; this is the easiest mechanism to enforce A1.

From inspection of (1) it can be seen that the x,y,z components of S(u,v) $\in$ R$^3$ are linearly independent as $N_{i,p}(u)$, $N_{j,q}(v) \in$ R$^1$ are scalars and $\mathbf{P}_{i,j} \in$ R$^3$. Combined with A1 and A2 this means that a problem of finding the z coordinates of the control points $\mathbf{P}_{i,j}$ whose *x, y* positions are known, from uncertain observation of the z position of the environment (surface) at known *x,y* locations. Hence (1) can be rewritten as (6):

$$z = \mathbf{A}(u,v)\mathbf{P}_{z}$$

$$\mathbf{A}(u,v) = \mathbf{N}_{i,p}(u)N_{j,q}(v) \qquad (6)$$

Where z $\in$ R$^1$ denotes the z coordinate of an observation of the surface defined by the control points $\mathbf{P}_{i,j}$, $\mathbf{A}(u,v) \in$ R$^{1 \times nm}$ is the *B*-spline basis function product vector and $\mathbf{P}_z \in$ R$^{nm \times 1}$ is the vector of the control point z coordinates obtained by reforming the control points matrix column-wise. It should be noted that the only requirement on the method through which $\mathbf{P}_z$ is formed is that $\mathbf{A}(u,v)$ should be formed in order to maintain equivalence between (1) and (6), hence alternative methods could also be used, e.g. row-wise.

A significant issue in B-spline surface fitting is that of parameterisation: $\{x,y,z\}^{\varphi} \rightarrow \{u,v\}$ (alternatively known as point-inversion). Although the problem is theoretically solvable in closed-form for $p,q \leq 4$, when the point exists on the surface, in practice the closed-form method for $p,q \geq 3$ often suffers from numerical tolerance problems. For the above problem there is a simplification based upon the assumptions described below which simplify the parameterisation problem.

Comparing (6) with (3) it can be seen that (6) may be posed as a discrete linear system, as shown in (7). It should be noted that we have explicitly utilised the assumption of a static environment through our use of the identity matrix as the process in (7).

$$\mathbf{x}(k) = \mathbf{F}(k)\mathbf{x}(k - 1) + \mathbf{B}(k)\mathbf{u}(k) + \mathbf{G}(k)\mathbf{v}(k)$$

$$\mathbf{z}(k) = \mathbf{H}(k)\mathbf{x}(k) = \mathbf{w}(k) \qquad (3)$$

$$\mathbf{P}_z(k) = 1 \cdot \mathbf{P}_z(k-1) + \mathbf{0}$$

$$\mathbf{z}(k) = \mathbf{A}_{u,v}(k)\mathbf{P}_z(k) + \Lambda z \tag{7}$$

To recast the problem as a discrete linear system, it is possible to rewrite (4) and (5) to construct a Kalman Filter that will estimate as its state $\mathbf{P}_z$ as shown in (8) and (9) where $\Lambda \mathbf{P}_z$ is substituted for E, the covariance of the filter.

$$\hat{\mathbf{P}}_z(k \mid k-1) = 1 \cdot \hat{\mathbf{P}}_z (k-1 \mid k-1) + \mathbf{0}$$

$$= \hat{\mathbf{P}}_z (k-1 \mid k-1)$$

$$\Lambda\mathbf{P}_z (k \mid k-1) = \mathbf{1} \cdot \Lambda\mathbf{P}_z (k-1 \mid k-1) \cdot \mathbf{1}^{\mathrm{T}}(k) + 0 \tag{8}$$

$$= \Lambda\mathbf{P}_z (k-1 \mid k-1)$$

$$\hat{\mathbf{P}}_z(k \mid k) = \hat{\mathbf{P}}_z(k \mid k-1) + \mathbf{W}(k)(z(k) - \mathbf{A}_{u,v}(k)\hat{\mathbf{P}}_z(k \mid k-1)$$

$$= \hat{\mathbf{P}}_z (k-1 \mid k-1) + \mathbf{W}(k)(z(k) - \mathbf{A}_{u,v}(k)\hat{\mathbf{P}}_z(k-1 \mid k-1)$$

$$\mathbf{W}(k) = \Lambda\mathbf{P}_z(k \mid k-1) \mathbf{A}^{\mathrm{T}}_{u,v}(k) \mathbf{A}_{u,v}(k) \Lambda\mathbf{P}_z(k \mid k-1) \mathbf{A}^{\mathrm{T}}_{u,v}(k) + \Lambda z(k))^{-1}$$

$$= \Lambda\mathbf{P}_z(k \mid k-1) \mathbf{A}^{\mathrm{T}}_{u,v}(k) \mathbf{A}_{u,v}(k) \Lambda\mathbf{P}_z(k \mid k-1) \mathbf{A}^{\mathrm{T}}_{u,v}(k) + \Lambda z(k))^{-1} \tag{9}$$

$$\Lambda\mathbf{P}_z(k \mid k) = \Lambda\mathbf{P}_z(k \mid k-1) - \mathbf{W}(k) \mathbf{A}_{u,v} \Lambda\mathbf{P}_z(k \mid k-1)$$

$$= \Lambda\mathbf{P}_z(k-1 \mid k-1) - \mathbf{W}(k) \mathbf{A}_{u,v} \Lambda\mathbf{P}_z(k-1 \mid k-1)$$

In order to calculate the uncertainty of a surface represented by $\{\mathbf{P}, \Lambda\mathbf{P}\}$ at an arbitrary position, consider the general Kaman Filter detailed above; the residual $\mathbf{r}(k) \triangleq z(k) - \mathbf{H}(k)\mathbf{x}^{\wedge}(k-1)$ is the difference between the measured value and the best estimate of its value prior to the measurement being taken. $S(k) = \mathrm{cov}(\mathbf{r}(k), \mathbf{r}^T(k))$ is the covariance of the residual (10) and it is possible to exploit $E\{\mathbf{r}(k)\} = 0$ as $\mathbf{W}(k)$ is chosen as the optimal Kalman gain.

$$\mathrm{Cov}(X,Y) = \mathrm{E}\{XY\} - \mathrm{E}\{X\}\mathrm{E}\{Y\}$$

$$= \mathrm{E}\{(X - \mathrm{E}\{X\}) \cdot (Y - \mathrm{E}\{Y\})\}$$

$$\mathbf{r}(k) = \mathrm{z}(k) - \mathbf{H}(k)\mathbf{x}^{\wedge}(k-1)$$

$$= \mathbf{H}(k)\mathbf{x}(k-1) + \mathbf{v}(k) - \mathbf{H}(k)\mathbf{x}^{\wedge}(k-1)$$

$$\mathbf{S}(k) = \mathrm{cov}(\mathbf{r}(k), \mathbf{r}^T(k))$$

$$= \mathrm{E}\{\mathbf{r}(k)\mathbf{r}^T(k)\} - \mathrm{E}\{\mathbf{r}(k)\} \cdot \mathrm{E}\{\mathbf{r}^T(k)\}$$

$$= \mathrm{E}\{\mathbf{r}(k)\mathbf{r}^T(k)\} - 0 \cdot 0$$

$$= \mathrm{E}\{[\mathbf{H}(k)[\mathbf{v}(k) - \mathbf{x}^{\wedge}(k-1)] + \mathbf{v}(k)] \cdot [\mathbf{H}(k)[\mathbf{x}^T - \mathbf{x}^{\wedge}(k-1)] + \mathbf{v}(k)]^T\}$$

$$= \mathrm{E}\{[\mathbf{H}(k)[\mathbf{x}(k) - \mathbf{x}^{\wedge}(k-1)] [\mathbf{x}(k) - \mathbf{x}^{\wedge}(k-1)]^T\mathbf{H}^T(k)$$

$$+ \mathbf{H}(k)[\mathbf{x}(k) - \mathbf{x}^{\wedge}(k-1)] \mathbf{v}^T(k)$$

$$+ \mathbf{v}(k) [\mathbf{x}(k) - \mathbf{x}^{\wedge}(k-1)]^T\mathbf{H}^T(k)$$

$$+ \mathbf{v}(k) \mathbf{v}^T(k)\}$$

$$= \mathbf{H}(k) \mathbf{P}(k-1)] \mathbf{H}^T(k) + \mathbf{R}(k)$$

Equation (10) is specialised for the problem of *B*-spline surface reconstruction to form (11) where the residual covariance is the sum of variance of two sources of uncertainty, the filter and the current observation. Hence for a surface represented by {$\mathbf{P}$, $\Lambda\mathbf{P}$}, define $\Lambda p_z$ (12) to be the variance of the surface at parameteric coordinates {$u,v$}.

$$\mathbf{S}(k) = \mathbf{A}_{u,v} \Lambda\mathbf{P}_z(k \mid k-1) \mathbf{A}^T_{u,v} + \Lambda z(k) \qquad (11)$$

$$\Lambda p_z \overset{\Delta}{=} \mathbf{A}_{u,v} \Lambda\mathbf{P}_z(k \mid k-1) \mathbf{A}^T_{u,v} \qquad (12)$$

The Kalman Filter form of the stated problem given in (8) and (9) for *l* point observations can be shown to have a computational complexity of $O(l \times (n \cdot m)^2)$, where *n, m* are the numbers of control points in the *u, v* directions respectively. Hence this approach is not attractive for situations where $l >> (n.m)$. An alternative formulation of the problem is presented using an Information Filter (see, for example, H.F. Durrant-Whyte, Multi-Sensor Data Fusion, Australian Centre for Field Robotics, University of Sydney, 2001), which results in a computational complexity which has a general worst-case of $O(l + (n \cdot m)^3)$. However, for practical considerations discussed in detail below, this formulation is likely to be preferred in the majority of cases.

A conventional Kalman Filter maintains an estimate of the state $\mathbf{x}^{\wedge}(i \mid j)$ and the associated variance $\mathbf{E}(i \mid j)$. An Information Filter maintains instead the information state vector $\mathbf{y}^{\wedge}(i \mid j)$ and the information matrix $\mathbf{Y}(i \mid j)$ which are defined in (13).

**EP 2 273 334 A1**

$$\mathbf{y}^{\wedge}(i \mid j) = \mathbf{E}^{-1}(i \mid j)\, \mathbf{x}^{\wedge}(i \mid j) \tag{13}$$

$$\mathbf{Y}(i \mid j) = \mathbf{E}^{-1}(i \mid j)$$

In the case when the additive process noise $\mathbf{v}(k) = \mathbf{0}$, the prediction and update stages of the Information Filter for the linear system in (3) are given by (14) and (15), respectively.

$$\mathbf{y}^{\wedge}(k \mid k - 1) = \mathbf{F}^{-T}(k)\mathbf{y}^{\wedge}(k - 1 \mid k - 1) + \mathbf{M}(k)\mathbf{B}(k)\mathbf{u}(k)$$

$$\mathbf{Y}(k \mid k - 1) = \mathbf{M}(k)$$

$$\mathbf{M}(k) = \mathbf{F}^{-T}(k)\mathbf{Y}(k - 1 \mid k - 1)\, \mathbf{F}^{-1}(k)$$

$$\mathbf{y}^{\wedge}(k \mid k) = \mathbf{y}^{\wedge}(k \mid k - 1) + \mathbf{H}^{T}(k)\mathbf{R}^{-1}(k)\mathbf{z}(k)$$

$$\mathbf{Y}(k \mid k) = \mathbf{Y}(k \mid k - 1) + \mathbf{H}^{T}(k)\mathbf{R}^{-1}(k)\mathbf{H}(k)$$

As before to obtain (8) and (9), (7) is substituted for the general linear system in (14) and (15) in order to to obtain the equations for the Information Filter form of our problem, given in (16) and (17).

$$\mathbf{y}^{\wedge}(k \mid k - 1) = 1 \cdot \mathbf{y}^{\wedge}(k - 1 \mid k - 1)$$

$$= \mathbf{y}^{\wedge}(k - 1 \mid k - 1)$$

$$\mathbf{M}(k) = 1 \cdot \mathbf{Y}(k - 1 \mid k - 1) \cdot 1 \tag{16}$$

$$= \mathbf{Y}(k - 1 \mid k - 1)$$

$$\mathbf{Y}(k \mid k - 1) = \mathbf{M}(k)$$

$$= \mathbf{Y}(k - 1 \mid k - 1)$$

$$\mathbf{y}^{\wedge}(k \mid k) = 1 \cdot \mathbf{y}^{\wedge}(k \mid k - 1) + \mathbf{A}^{T}_{u,v} + \Lambda z(k) \cdot z(k)$$

$$\mathbf{Y}(k \mid k) = \mathrm{Y}(k \mid k-1) + \Lambda z(k)\, \mathbf{A}^{\mathrm{T}}_{u,v}\, \mathbf{A}_{u,v} \qquad\qquad (17)$$

The parameterisation of observations $\{x,y,z\}^{\varphi} \to \{u,v\}$ is a step in *B*-spline surface fitting. In the general case problem Newton's method can be used to iteratively solve for the parametric coordinates on the surface $\{u,v\}_s$ which minimise $\|\{x,y,z\}_p - \varphi^{-1}(\{u,v\}_s)\|_2$, where $\{x,y,z\}_p$ denotes the point for which the parametric coordinates are desired.

It can be observed that as a consequence of A3 and the observation above that $\{x,y,z\}$ are linearly independent in (1) that as $\mathbf{P}_{i,j}(x,y)$ is constant, $\mathbf{S}_{u,v}(x,y)$ is independent of $\mathbf{P}_{i,j}(z)$. Thus, irrespective of $\mathbf{P}_{i,j}(z)$ and hence the shape of the surface, a fixed position $\{u,v\}$ in parametric coordinates *always* maps to a fixed column $\{u,v\}$ (z free) in the external frame. In conjunction with A1 and A2 this allows us to build a parameterisation $\varphi_{x,y} : \{u,v\} \varphi_{x,y} \to \{u,v\}$ for a 'simple' surface and then use it, without loss of generality on an arbitrary surface (subject to the above-mentioned assumptions). In this context a 'simple' surface is one that simplifies the construction of $\varphi_{x,y}$, although the method of construction is still subject to the constraints mentioned above.

The Information Filter form of the B-spline surface reconstruction problem detailed above have a number of practical advantages over the Kalman Filter form. Principally, the computational cost of updating the filter is upper bounded by $O(l + (n \cdot m) \cdot ([p+1] \cdot [q+1])^2)$ which simplifies in the case $l \!>\! >\! (n\!\cdot\! m) > ([p+1]\,[q+1])^2) \Rightarrow O(l)$, allowing large numbers of observations to be efficiently incorporated into the surface estimate. This efficiency in updating the filter comes at the cost of requiring an inversion $O((n \cdot m)^3)$, of the information matrix to obtain $\Lambda \mathbf{P}_z$ when predicting using the filter.

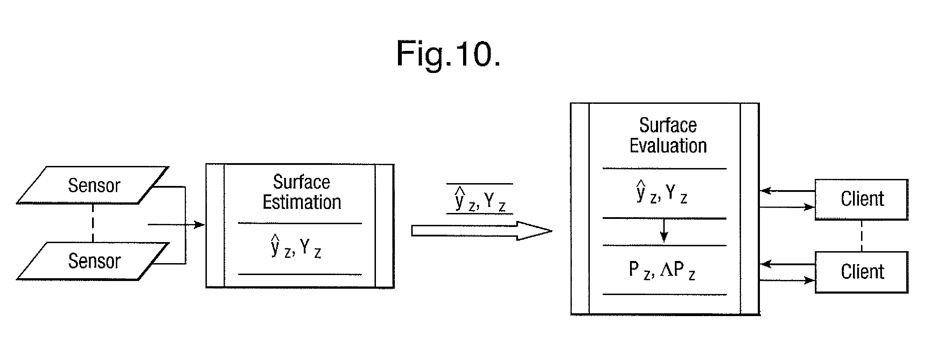

However, for typical usage scenarios where the frequency of observations >> frequency of prediction requests, the conversion back to Kalman Filter form from Information Filter form and the resulting $O((n \cdot m)^3)$ inversion operation can be performed at the lower frequency of prediction requests. It is also noted that the bonded sparsity of the Information filter allows alternative matrix inversion techniques and approximations that reduce the computational cost of inverting. Additionally, if prediction requests are batched then the inversion often need only be performed once per batch. As a result of the sparsity of the information matrix $\mathbf{Y}_z$ discussed in detail below it can be compactly transmitted allowing the easy separation of the update and prediction operation across multiple nodes as shown in Figure 10, further lessening the impact of the $O((n \cdot m)^3)$ inversion operation.

Considering the Information Filter form of the B-spline surface fitting given above, it can be observed that the only update terms $\in \mathrm{R}^1$ in the update stage (17) are composed of $\mathbf{A}_{u,v}$.

$$\mathbf{y}^{\wedge}(k \mid k) = \mathbf{y}^{\wedge}(k \mid k-1) + \mathbf{A}^{\mathrm{T}}_{u,v} + \Lambda z(k) \cdot z(k)$$

$$\mathbf{Y}(k \mid k) = \mathrm{Y}(k \mid k-1) + \Lambda z(k)\, \mathbf{A}^{\mathrm{T}}_{u,v}\, \mathbf{A}_{u,v} \qquad\qquad (17)$$

At most $(p+1)(q+1)$ elements of $\mathbf{A}_{u,v}$ are non-zero and hence it is sparse. At this point for brevity and ease of implementation, two additional assumption are made:

> A4 $\mathbf{P}_z$ is formed column-wise from the control points matrix.
> A5 The number of control points in the parametric directions $u$ and $v$ are equal $\Rightarrow n = m$.
> A6 The degree of the B-spline surface in the parametric directions $u$ and $v$ are equal $\Rightarrow p = q$.

Although similar formulations to those given in here can be constructed for cases where these additional assumptions are not made, the form of the constructions is dependent upon the relationships between the B-spline parameters and their usage.

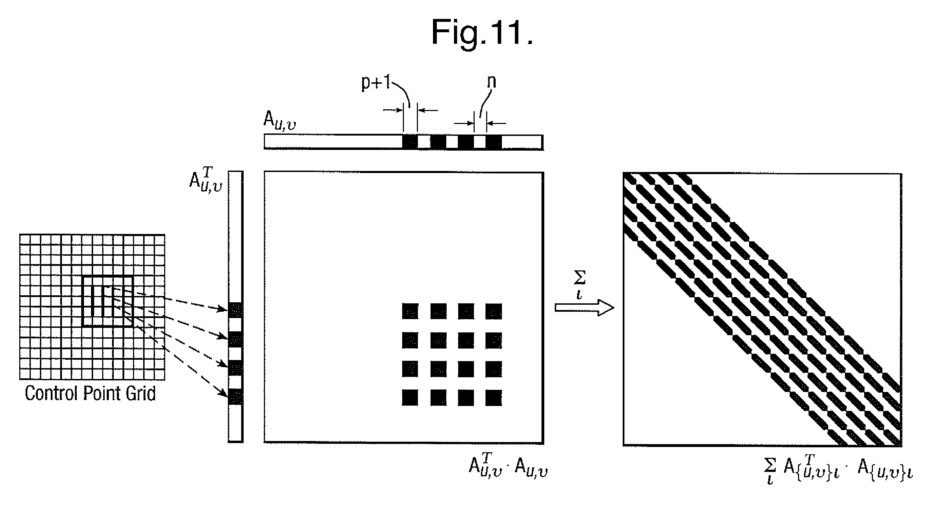

As a consequence of the assumptions above, $\mathbf{A}_{u,v}$ consists of $(p+1)$ groups of $(p+1)$ non-zero elements separated by $n$ elements. Thus $\mathbf{A}^{\mathrm{T}}_{u,v} \cdot \mathbf{A}_{u,v}$ and the resulting sum over all observations (in this filter update) are sparse, as shown in Figure 11 (where p = 3, n = 15).

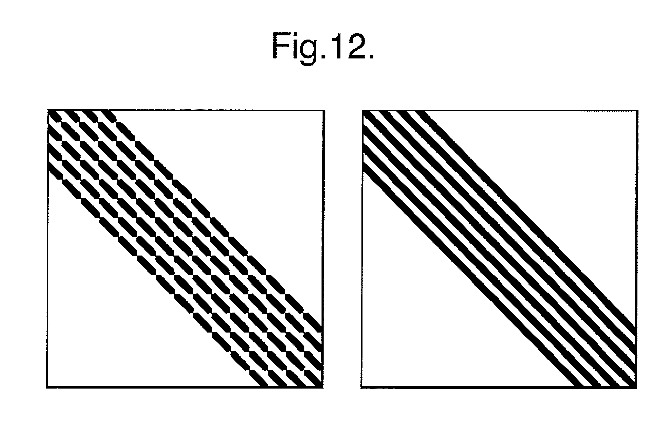

In order to determine an upper-bound on the number of non-zero elements in $\Sigma_l \mathbf{A}^{\mathrm{T}}_{\{u,v\}} \mathbf{A}_{\{u,v\}l}$, mapping of P from a matrix to a vector as shown in Figure 12 (shaded elements are counted as non-zero).

Using this simplification, it is possible to derive the number of non-zero elements in $\Delta \mathbf{Y}^{\Delta} = \Sigma_l \mathbf{A}^{\mathrm{T}}_{\{u,v\}} \mathbf{A}_{\{u,v\}l}$, resulting in (18). The form of the derivation is to observe that $\Delta \mathbf{Y}$ is symmetric and thus we need only consider the diagonal indices $d \geq 0$ and that for $M \in Re^{k \times k}$, $-n \leq d \leq n$ : $\dim(\mathrm{diag}(M,d) = k - |d|$.

$$\Delta Y = \left( \sum_{i=1}^{p} \sum_{j=-p}^{p} n^2 - [(i \cdot n) + j] \right) + \sum_{j=0}^{p} n^2 - j$$

$$= (2p+1) \cdot p \cdot n^2 - (2p+1) \cdot n \sum_{i=1}^{p} i - \sum_{j=-p}^{p} j + (p+1) \cdot n^2 - \sum_{j=0}^{p} j$$

$$= (2p+1) \cdot p \cdot n^2 - (2p+1) \cdot n \frac{p \cdot (p+1)}{2} - 0 + (p+1) \cdot n^2 - \frac{p \cdot (p+1)}{2}$$

$$\Delta Y = n^2 \cdot (2p^2 + 2p + 1) - n \cdot \frac{(2p^3 + 3p^2 + p)}{2} - \frac{p^2 + p}{2}$$

$$\text{(18)}$$

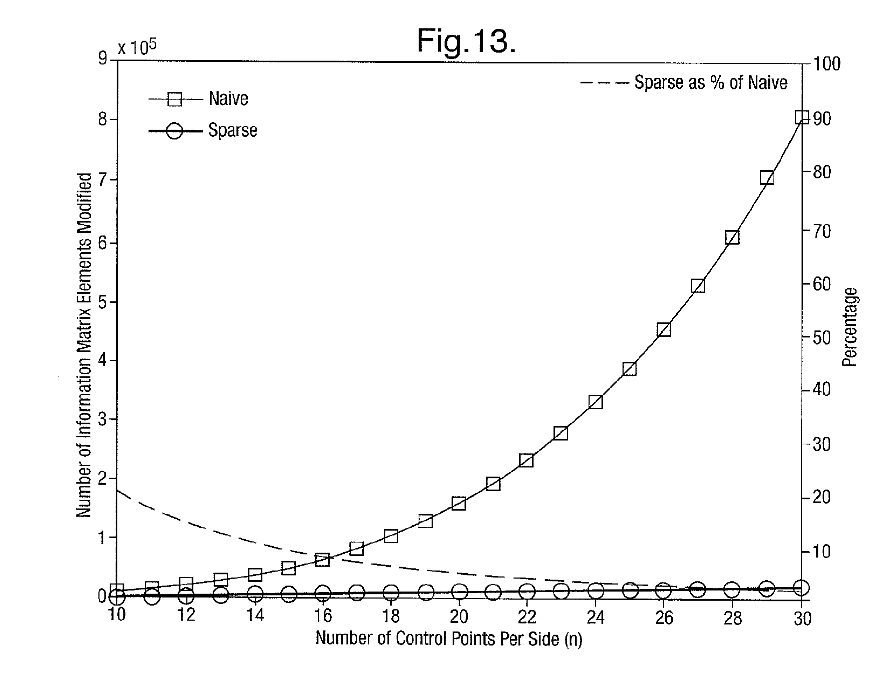

Using (18) it is possible to compare the number of elements of **Y** updated after exploitation of the sparsity of **A**$_{u,v}$ relative to the naïve case when all element of $\Delta$**Y** are calculated: $n^2 \cdot n^2 = n^4$, as shown in Figure 13. The benefits of exploiting the sparsity properties of Y are particularly relevant if the update and prediction stages are distributed over multiple nodes (Figure 10) due to the significant reduction in data that must be communicated between the nodes.

As detailed above, under the assumptions the parameterisation $\{x,y\}^{\varphi x, y}\{u,v\}$ can be built for a 'simple' surface and then used for an arbitrary surface. As $\varphi_{x,y}$ is dependent upon **P**$_{x,y}$, **U,V**,$p$, it is implemented as a lookup table that is built for a flat surface **P**$_z$ = **0** by iteratively evaluating (1) at $\{u,v\}$ coordinates and sub-sampling until the required resolution in $\{x,y\}$ is achieved.

## Claims

1. A method of terrain sensing for use onboard a vehicle (100), the method including:

   obtaining data (104) from at least one sensor onboard a vehicle;
   using the sensor data to generate data representing a surface defined by a set of control points;
   generating gradient information by computing a gradient of the surface for at least one query point, and converting the gradient information into a local frame coordinate system for the vehicle.

2. A method according to claim 1, including using a Kalman filter process to generate a B-spline representation of the surface.

3. A method according to claim 2, wherein the B-spline is a NURBS (Non Uniform Rational Basis Spline).

4. A method according to claim 3, wherein the step of generating gradient information includes calculating a normal vector to the surface and deriving a transform relative to the z-axis of the vehicle frame.

5. A method according to any one of the preceding claims, further including checking the gradient information against at least one threshold to assess vehicle rollover risk.

6. A method according to claim 4, wherein the step of assessing the vehicle rollover risk includes:

   obtaining data representing a yaw of the vehicle;
   obtaining data representing a normal of a location on the surface where the vehicle is positioned, and using the yaw and the surface normal data to estimate roll and pitch of the vehicle at its location.

7. A method according to claim 6, further including comparing the roll and pitch with models to assess whether the vehicle is at risk from a rollover.

8. A method according to claim 7, further including a step of using the converted gradient information to assist planning a route for the vehicle.

9. A method according to claim 8, further including creating a route for the vehicle that avoids an area including the rollover risk.

10. A method according to any one of the preceding claims, further including:

storing a first data set representing the surface at a first point in time;
storing a second data set representing the surface at a second point in time, and
comparing the first and the second data sets to detect changes relating to the surface.

11. A computer program product comprising a computer readable medium, having thereon computer program code means, when the program code is loaded, to make the computer execute a method according to any one of the preceding claims.

12. Apparatus configured to sense terrain including a processor (106) configured to:

obtain data from at least one sensor (104) onboard a vehicle;
use the sensor data to generate data representing a surface defined by a set of control points;
generate gradient information by computing a gradient of the surface for at least one query point, and
convert the gradient information into a local frame coordinate system for the vehicle.

13. Apparatus according to claim 12, wherein the at least one sensor includes a LIDAR, RADAR or image-based sensor.

14. Apparatus according to claim 12 or 13, wherein the vehicle is an at least partially autonomous vehicle.

15. A vehicle including apparatus according to claim 12 or 13.

# Fig. 1.

# Fig.2.

Receive uncertainty measure of error function model(s) for sensor(s)    202

Receive observations from sensor(s)    204

Generate point cloud from the sensor(s) observations    206

Perform Kalman filter prediction to estimate control points of B-spline/NURBS surface    208

Calculate gradient of the surface for a query point    210

Transform gradient to local vehicle coordinate frame    212

Output estimated surface/gradient information    214

Perform Kalman filter update    216

# Fig.3.

EP 2 273 334 A1

# Fig.4.

402 — Sample Points $\{X,Y\}_L$

404 — $T_{KF} == T_{IF}$ ? — Yes

No

406 — Convert Information Filter to Kalman Filter Form: $\hat{y}_z, Y_z \Rightarrow P_z, \Lambda P_z$

408 — Update Kalman Filter Timestamp $T_{KF} = T_{IF}$

410 — Compute B-Spline Basis Functions $\{N_I(u), N_J(v)\}_L$

412 — Construct Sparse B-Spline Basis Function Product Vector $A_{\{u,v\}_L}$

414 — Compute Z Coordinates of B-Spline Surface $z_L = A_{\{u,v\}_L} P_z$

416 — Compute Gradients of B-Spline Surface

418 — Compute Uncertainty in Z Coordinates of B-Spline Surface $\Lambda z = A_{\{u,v\}_L} \Lambda P_z A^T_{\{u,v\}_L}$

420 — End

# Fig.5.

502 — Point Cloud
$\{X, Y, Z, \Lambda Z\}_L$

504 — Compute B-Spline
Basis Functions
$\{N_j(u), N_j(v)\}_L$

506 — Construct Sparse
B-Spline Basis
Function Product Vector
$A_{\{u,v\}_L}$

508 — Update Information
State Vector
and Information Matrix
$\hat{y}_Z, Y_Z$

510 — Update Information
Filter Timestamp
$T_{IF}$ = Current Time

A / E Input Point Cloud

512 — End

# Fig.6.

EP 2 273 334 A1

Green ——
Blue ········
Red ——

# Fig.6(Cont.).

Lateral axis

Longitudinal axis

# Fig.7.

# Fig.8.

# Fig.9.

$$\dot{N} = \upsilon \cos (\alpha)$$

$$\dot{E} = \upsilon \sin (\alpha)$$

$$\dot{\upsilon} = \alpha$$

$$\dot{\alpha} = \frac{\upsilon}{L} \tan (\psi)$$

# Fig.10.

Sensor

Sensor

Surface
Estimation

$\hat{y}_z, Y_z$

$\overline{\hat{y}_z, Y_z}$

Surface
Evaluation

$\hat{y}_z, Y_z$

$P_z, \Lambda P_z$

Client

Client

Fig.11.

$$A_{u,v}$$

$$A_{u,v}^T$$

Control Point Grid

$$A_{u,v}^T \cdot A_{u,v}$$

$$\sum_{\iota}$$

$$\sum_{\iota} A_{\{u,v\}\iota}^T \cdot A_{\{u,v\}\iota}$$

# Fig.12.

Fig.13.

**EUROPEAN SEARCH REPORT**

Europäisches Patentamt
European Patent Office
Office européen des brevets

Application Number

EP 09 27 5047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Kubota T et al.: "Path Planning for Newly Developed Microrover"<br>Proceedings of the 2001 IEEE International Conference on Robotics and Automation vol. 4,<br>31 December 2001 (2001-12-31), pages 3710-3715, XP002565416<br>Seoul, Korea<br>Retrieved from the Internet:<br>URL:http://ieeexplore.ieee.org/stamp/stamp.jsp?tp=&arnumber=933195&isnumber=20185><br>[retrieved on 2010-01-25]<br>* the whole document * | 1-15 | INV.<br>G05D1/02 |
| Y | Shiller Z, Gwo YR: "Dynamic motion planning of autonomous vehicles"<br>IEEE TRANSACTIONS ON ROBOTICS AND AUTOMATION vol. 7, no. 2,<br>30 April 1991 (1991-04-30), pages 241-249, XP002565417<br>Retrieved from the Internet:<br>URL:http://ieeexplore.ieee.org/stamp/stamp.jsp?tp=&arnumber=75906&isnumber=2532><br>[retrieved on 2010-01-25]<br>* the whole document * | 1-15 | |
| Y | Boller R: "Dynamic Path Planning over Partially-Known 3-D Terrain"<br><br>31 December 2006 (2006-12-31), XP002565418<br>Brown University<br>Retrieved from the Internet:<br>URL:http://www.cs.brown.edu/people/rboller/cs148/RBoller-CS148-FinalPaper.pdf><br>[retrieved on 2010-01-25]<br>* page 8 * | 1-15 | TECHNICAL FIELDS SEARCHED (IPC)<br><br>G05D<br>B60T<br>A01B |

-----

-----

-/--

The present search report has been drawn up for all claims

| Place of search | Date of completion of the search | Examiner |
|---|---|---|
| Munich | 27 January 2010 | Vañó Gea, Joaquín |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 27 5047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 7 272 474 B1 (STENTZ ANTHONY [US] ET AL) 18 September 2007 (2007-09-18) * column 1, line 43 - column 6, line 34; claims 1-11; figures 1,2 * | 1-15 | |
| Y | EP 1 527 667 A1 (DEERE & CO [US]) 4 May 2005 (2005-05-04) * the whole document * | 1-15 | |

TECHNICAL FIELDS
SEARCHED       (IPC)

The present search report has been drawn up for all claims

| Place of search | Date of completion of the search | Examiner |
|---|---|---|
| Munich | 27 January 2010 | Vañó Gea, Joaquín |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 27 5047

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| US 7272474 | B1 | 18-09-2007 | NONE | | |
| EP 1527667 | A1 | 04-05-2005 | US | 2009292412 A1 | 26-11-2009 |
| | | | US | 2005096802 A1 | 05-05-2005 |

EPO FORM P0459

For more details about this annex : see Official Journal of the European Patent Office, No. 12/82

**EP 2 273 334 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y Huang ; X Qian.** Dynamic B-spline Surface Reconstruction: Closing the sensing-and-modelling loop in 3D digitaliziation. *Computer-Aided Design,* November 2007, vol. 39 (11

- **H.F. Durrant-Whyte.** Multi-Sensor Data Fusion. *Australian Centre for Field Robotics,* 2001